# EUROPEAN PATENT SPECIFICATION

(11) **EP 1 763 261 B1**
(45) Date of publication and mention of the grant of the patent: **27.08.2008**
(21) Application number: 05771685.4
(22) Date of filing: 22.07.2005
(51) Int. Cl.: H04Q 7/22

(54) **IMPLEMENTING METHOD FOR SHORT MESSAGE SERVICE**
IMPLEMENTIERUNGSVERFAHREN FÜR EINEN KURZNACHRICHTENDIENST
MISE EN OEUVRE DE SERVICE SMS

(30) Priority: 23.07.2004 CN 200410070883
(43) Date of publication of application: 14.03.2007
(73) Proprietor: Huawei Technologies Co., Ltd., Longgang District, Shenzhen Guangdong 518129 (CN)
(72) Inventor: WANG, Jie, Huawei Administration Building, Shenzhen Guangdong 518129 (CN)
(74) Representative: Thun, Clemens
(86) International application number: PCT/CN2005/001102
(87) International publication number: WO 2006/007799

(56) References cited:
- EP-A1- 1 437 017
- EP-A2- 1 255 414
- WO-A-02/07454
- CN-A- 1 422 050
- CN-A- 1 484 464
- US-A- 6 101 393
- US-A1- 2003 083 078

## Description

### Field of the Invention

The present invention relates to mobile communication techniques, and particularly, to a method for implementing short message services.

### Background of the Invention

In recent years, along with the development of mobile communications, value-added mobile services, especially short message services have seen rapid growth worldwide. However, illegal short messages and junk short messages are becoming a problem to operators and subscribers. The sources of the illegal short messages or the junk short messages include some organizations' illegal opinions and massive website advertisements. To an individual subscriber, all the short messages that he does not want to receive are junk short messages.

Similar to junk mails on the Internet, the widely spreading of junk short messages not only brings a lot of trouble to subscribers, but also consumes a great deal of mobile communication network resources. Accordingly, normal communications of the subscribers are affected to some extent. For example, junk short messages may result in network congestion or network breakdown. Therefore, preventing the spreading of illegal short messages and junk short messages improves the subscribers' service satisfaction, and facilitates network service development. So currently it is the operators' major concern to solve the problem.

Operators in some countries have already employed some control methods against the illegal short messages and the junk short messages. These methods mainly include filtering short messages based on the content thereof. A short message service centre or a short message gateway, by performing a content matching operation on the short messages to be filtered, helps mobile operators to filter the junk short messages and the illegal short messages, so as to guarantee that the content of the short messages from content providers or mobile telephones are legal. Therefore, benefits of the subscribers are protected.

According to the traditional mechanism of filtering short messages, the short messages are usually filtered based on the illegal or sensitive contents therein, or based on the checking result of the validity of message originators, e.g. whether a website is registered legally. In accordance with such a filtering mechanism, individual demands of subscribers are not taken into consideration. In other words, different subscribers hope to filter messages from the different message originators, for example, a subscriber A wants to filter the messages sent by website A and a subscriber C, while a subscriber B hopes to only receive the messages sent by the website A and all mobile subscribers and to filter the messages sent by all the other websites; or different subscribers hope to filter messages carrying different contents, for example, a subscriber A hopes to filter all the short messages carrying a content of "big present", while a subscriber B hopes to filter all the short messages carrying a content of "advertisement".

As to short message filtering, WO 0207454 discloses a system of improving the functionality of a call-unrelated service like Short Message Service and an Unstructured Supplementary Service Data Service in an Intelligent Network. The system comprises a switching means (SSP) for receiving a call-unrelated data chain like a short message or a USSD string and processing it on the basis of stored subscriber data, and a control means (SCP) for controlling the processing operation of the switching means which is able to detect detection points in the subscriber data and reports to the control means upon detection of an event detection point previously armed by the control means.

### Summary of the Invention

In view of the above, an embodiment of the present invention provides a method in an Intelligent Network for implementing short message services, which enables a subscriber to filter the short messages according to his own will so as to meet the personalized demands of subscribers.

A method for implementing short message services, includes:
setting, in a service control point (SCP), short message filtering rules for subscribers through communication between the SCP and a Web server or a Wireless Application Protocol (WAP) server or client center of an operator or the subscribers;
before sending a short message to a receiver, determining, in the SCP, whether the short message needs to be filtered according to the short message filtering rule of the receiver; if the short message needs to be filtered, the network side filtering the short message; if the short message does not need to be filtered, the network side sending the short message to the receiver.

In accordance with an embodiment of the present invention, the subscriber can define the short message filtering rule by himself on the network side. Before sending the short messages to the receiver, the network side can filter the short messages according to the short message filtering rule of the receiver, thus implement the short message services. According to the method in accordance with an embodiment of the present invention, it is only a separate device or a corresponding function as a short message filtering rule server that needs to be added to the existing network, while other network entities such as a Mobile Switching Center (MSC), a Serving GPRS Supporting Node (SGSN) are not affected. Implementing the short message filtering with such a method, it is convenient for operators to deploy and provide the service, and filter short messages according to the personalized demands of subscribers. Therefore, the subscribers' service satisfaction is improved.

### Brief Description of the Drawings

Figure 1 is an illustrative flow chart in accordance with an embodiment of the present invention;
Figure 2 is an illustrative flow chart showing a first embodiment for implementing short message services according to the present invention;
Figure 3 is a message sequence chart illustrating an interaction flow between a short message service centre or a short message gateway and a short message filtering rule server in accordance with an embodiment of the present invention;
Figure 4 is an illustrative flow chart showing a second embodiment for implementing short message services according to the present invention;
Figure 5 is a message sequence chart illustrating an interaction flow between an MSC/SGSN, an SCP and an SMSC in a short message filtering process in accordance with the second embodiment of the present invention.

### Detailed Description of Embodiments

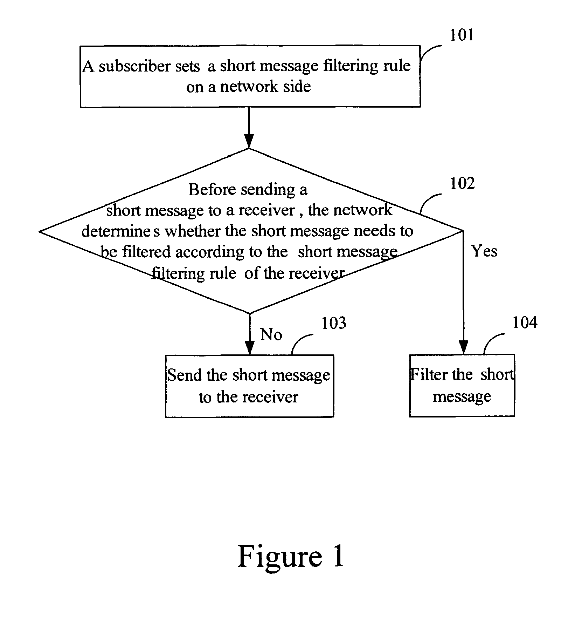

As shown in Figure 1, the procedure for implementing an embodiment of the present invention is as follows.

Step 101: a subscriber sets a short message filtering rule for himself on a network side.

The short message filtering rule can be set in a short message filtering rule server or a Service Control Point (SCP). The short message filtering rule server can be a separate physical entity, or an unseparated physical entity. Furthermore, the subscriber can set the short message filtering rule on the network side through the Web, the Wireless Application Protocol (WAP), the Unstructured Supplementary Service Data (USSD), a client center of an operator or an intelligent network.

Moreover, in practical applications, each subscriber can set, update or modify the short message filtering rule of his own on the network side through the above means.

Step 102: before sending a short message to a receiver, the network side determines whether the short message needs to be filtered according to the short message filtering rule of the receiver, if the short message needs to be filtered according to the short message filtering rule of the receiver, proceeds to Step 104, if the short message does not need to be filtered according to the short message filtering rule of the receiver, proceeds to Step 103.

Step 103: the network side sends the short message to the receiver.

Step 104: the network side filters the message, i.e. the network side does not send the short message.

According to a first example useful for understanding the invention, the short message filtering rule is set in the short message filtering rule server; according to an embodiment of the invention, the short message filtering rule is set in the SCP. The example and the embodiment are described in detail to explain the technique solutions of the invention.

The technique solutions of the present invention are hereinafter described in detail with the first example useful for understanding the invention

According to the present example, the short message filtering function defined by a mobile subscriber is implemented by a short message service center or a short message gateway. In an existing network, a physical entity or a corresponding function module serving as the short message filtering rule server needs to be added; functions of the short message service center or the short message gateway should be enhanced; whereas, there is no influence to all the other network entities such as a Mobile Switching Center (MSC), a Serving GPRS Supporting Node (SGSN) and etc.

The short message filtering rule in the present example is to filter the short messages sent by specific originators, or to filter the short messages containing specific contents. The subscriber can define and maintain the short message filtering rule by multiple means, and transmit and save the short message filtering rule in the short message filtering rule server by multiple means.

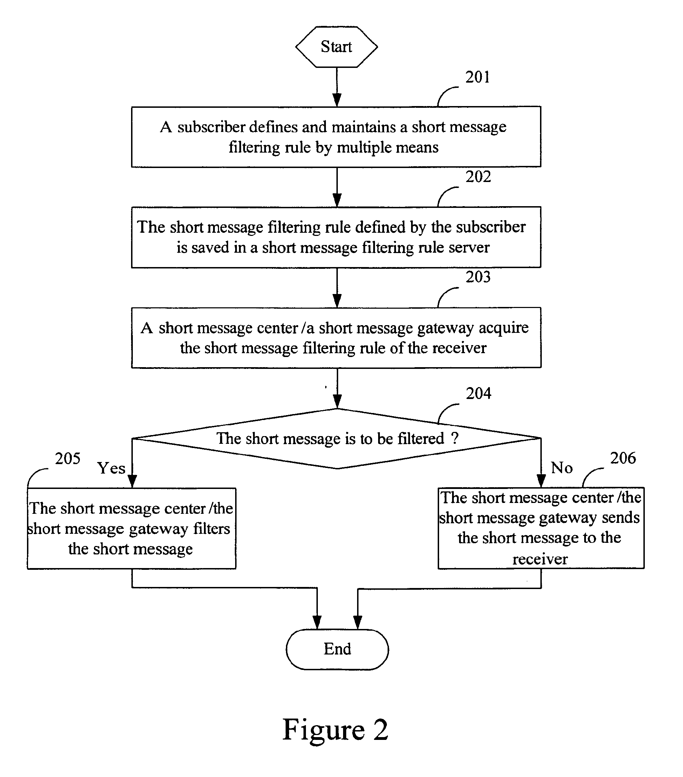

As shown in Figure 2, the method in accordance with the present example comprises the following steps.

Step 201: a subscriber defines and maintains a short message filtering rule by multiple means.

Step 202: the mapping relation between the short message filtering rule defined by the subscriber and the identifier of the subscriber is saved in a short message filtering rule server.

Step 203: before sending a short message to a receiver, a short message center or a short message gateway gets the short message filtering rule of the receiver from the short message filtering rule server.

Step 204: the short message center or the short message gateway determines whether the short message needs to be filtered according to the short message filtering rule of the short message receiver, if the short message needs to be filtered according to the short message filtering rule of the short message receiver, proceeds to Step 205; if the short message does not need to be filtered according to the short message filtering rule of the short message receiver, proceeds to Step 206.

Step 205: the short message center or the short message gateway terminates sending the short message.

Step 206: the short message center or the short message gateway sends the short message to the short message receiver and terminates the procedure.

The short message filtering rule in the present example can include two types of short message filtering rule.

The first type of the short message filtering rule is a rule for banning or permitting the short messages sent by some certain short message originators, that is, for restricting the short message originators. This type of filtering rule includes a length rule and a number rule, and the two rules are effective at the same time. The length rule is to ban or permit the originator number whose length matches the length rule. The number rule is to ban or permit the originator number which matches the number rule.

A maximum number head matching mode can be applied to the numbers in the number rule. The numbers in the number rule can include a wildcard. There are two types of the wildcard: the wildcard of single number and the wildcard of multiple numbers. The wildcard of single number refers to the wildcard that represents only one number, while the wildcard of multiple numbers refers to the wildcard that represents multiple numbers.

The short message filtering rule is hereinafter described by examples.

The length rule: if the length of the number is 4, ban; if the length of the number is 11, permit. Specifically speaking, the rule bans the originator whose number is of the length of 4, and permits the originator whose number is of the length of 11. For example, currently the length of the short message originator numbers of the value added service providers is 4, such as 8888, while the length of the numbers of the ordinary mobile subscribers is 11. In the case, short messages from the service providers are banned, while short messages from the ordinary mobile subscribers are permitted.

The number rule: supposing that * represents a wildcard of single number, and # represents a wildcard of multiple numbers: 13312312312, permit; 133*11*23*3, permit; 133, ban; 139#87, ban. The rule is to permit the short messages sent by the subscriber whose number is 13312312312, permits the short messages sent by all the subscribers whose numbers are 133*11*23*3 (* represents a random number), ban the short messages sent by all the other subscribers whose number head is 133, and ban the short messages sent by all the subscribers whose number are 139#87 (# represents multiple random numbers).

The second type of the short message filtering rule is a rule for banning or permitting the short messages carrying some specific contents. The specific contents in this type of filtering rule can include a wildcard, which represents multiple random characters. For example: sales, ban; award*present, ban. The rule bans the short messages including the contents of "sales" or "award*present".

The above step of the subscriber defining and maintaining the short message filtering rule can be implemented through multiple means. For example:
(1) the Web: the subscriber defines and maintains the short message filtering rule through the Web, which can be done using a computer or a mobile telephone;
(2) the WAP: the subscriber logs on a WAP server using a mobile telephone, defines and maintains the short message filtering rule;
(3) the USSD: the subscriber interacts with a server by the USSD using a mobile telephone, defines and maintains the short message filtering rule;
(4) the client center of the operator: the subscriber contacts the client center of the operator so as to define and maintain the short message filtering rule through voice or other ways;
(5) the intelligent network: the subscriber dials an intelligent network access number, defines and maintains the short message filtering rule with the corresponding voice prompts.

Of course, the present example does not limit other ways for defining the short message filtering rule. Maintaining the short message filtering rule includes such operations as revising the short message filtering rule, deleting a part of the short message filtering rule, deleting all the short message filtering rule, and activating or deactivating the short message filtering rule. It is not limited herein which means for defining and maintaining the short message filtering rule is employed in practice, which can be determined by the operator.

The short message filtering rule server can be a separate physical entity in the network, or can be a function module in other service servers. There can be one or multiple short message filtering rule servers in the network; and the short message filtering rule defined by the subscriber is saved in one of the short message filtering rule servers according to a certain distribution disciplinarian. For example, determine the server in which the short message filtering rule is to be saved according to the identifier of the subscriber or the home network of the subscriber. The network structure or the method for choosing the short message filtering rule server are not limited in the present invention, and can be determined by the operator.

Furthermore, before sending the short message to the short message receiver, the short message center or the short message gateway needs to get the short message filtering rule defined by the short message receiver. If the short message filtering rule is saved in the short message center or the short message gateway, an interface for signalling interaction is not necessary. However, if the short message filtering rule is saved in the short message filtering rule server, signalling interactions between the short message center or the short message gateway and the short message filtering rule server should be performed. The short message center or the short message gateway determines the short message filtering rule server to interact with according to the distribution disciplinarian such as the subscriber identifier of the receiver or the home network of the subscriber, and sends a request to get the short message filtering rule of the short message receiver.

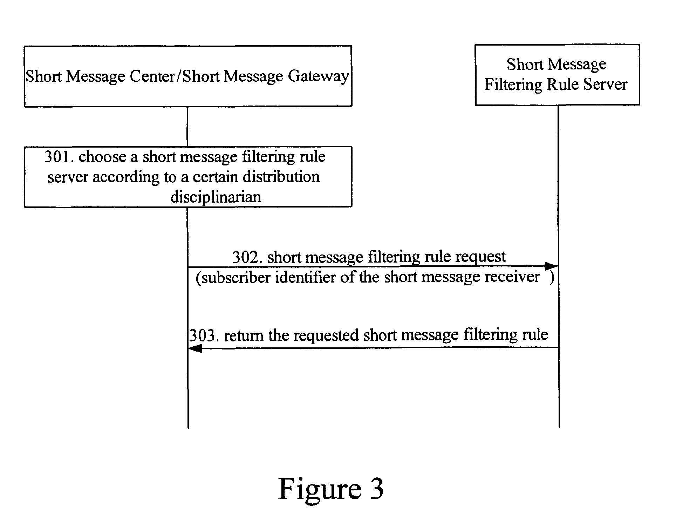

The signalling interface protocol between the short message center or the short message gateway and the short message filtering rule server is not prescribed in the present example and is determined by the operator. The corresponding flow of the present example is shown in Figure 3, comprising the following steps.

Step 301: a short message center or a short message gateway chooses a short message filtering rule server according to a certain distribution disciplinarian.

Step 302: the short message center or the short message gateway sends a short message filtering rule request carrying the subscriber identifier of the short message receiver to the short message filtering rule server.

Step 303: the short message filtering rule server returns the requested short message filtering rule to the short message center or the short message gateway.

Of course, the short message filtering rule defined by the subscriber may not be applicable in practical operations. In such a case, a default processing to the short messages can be configured statically in the short message center or the short message gateway. In other words, when the short message center or the short message gateway does not find the corresponding short message filtering rule from the short message filtering rule server, the short message center or the short message gateway c an directly ban or permit, usually permit, the short messages that match the range of the short message filtering rule. The default processing to the short messages is set by the operator based on the practical requirements.

For example, the short message filtering rule subscribed by a subscriber A is: banning short messages sent by a subscriber B and a subscriber D, and banning short messages carrying a content of "sales". Therefore, for a short message which is sent by a subscriber C and does not carry the content of "sales", there is no applicable filtering rule. If the default processing in the short message center or the short message gateway is permitting, the short message is sent to the subscriber A.

The short messages, banned by the short message center or the short message gateway, are not sent to the short message receivers. The short message center or the short message gateway can perform statistics on the amount, the time or the originator of the banned short messages according to the practical requirement of the operator such as the requirement in charging, statistics and so on. The short message center or the short message gateway can also send a prompt to the short message originator indicating that a short message having been banned from being sent.

By employing the solution in accordance with the present example, the subscriber can define the short message filtering rule in the short message filtering rule server, and the short message center or the short message gateway can implement the short message filtering function defined by the subscriber. In the solution in accordance with the example of the present invention, the separate device or the corresponding function module as the short message filtering rule server needs to be added to the existing network; functions of the short message service center or the short message gateway should be enhanced; whereas there is no influence to all the other network entities such as the MSC or the SGSN. In such a solution for implementing the short message filtering, it is convenient for the operator to deploy and provide the services, and to filter the short messages according to the personalized demands of the subscribers. Therefore, the subscribers' service satisfaction is improved

The technique solutions of the present invention are hereinafter described in detail with the embodiment.

In the present embodiment, a subscriber sets in a Service Control Point (SCP) short message filtering rules to filter short messages sent by specific originators. After receiving the short message carrying a number of the originator and a number of the receiver issued by the short message center, the home MSC/SGSN of the receiver determines whether the Customized Application for Mobile network Enhanced Logic (CAMEL) subscription information of the receiver includes a subscription content of mobile terminating short message. If the CAMEL subscription information of the receiver includes a subscription content of mobile terminating short message, the MSC/SGSN report to the SCP a short message receiving related event notification, which includes the subscriber numbers of the short message originator and the short message receiver. The SCP determines whether the short message needs to be filtered according to the short message filtering rule of the receiver saved by the SCP itself. If the short message needs to be filtered, the SCP issues a releasing command to make the MSC/SGSN terminate sending the short message; if the short message does not need to be filtered, the SCP issues a continuing command to make the MSC/SGSN to continue the normal process of sending the short message.

The short message filtering rule in the present embodiment is to filter the short messages sent by the specific originators, but not to filter the short messages containing specific contents. Furthermore, the short message filtering defined by the subscriber is implemented by the CAMEL in accordance with the present embodiment. Therefore, the subscriber who applies for the short message filtering service must be a CAMEL subscriber, that is, a subscriber having the Mobile Terminating Short Message Service CAMEL Subscription Information (MT-SMS-CSI).

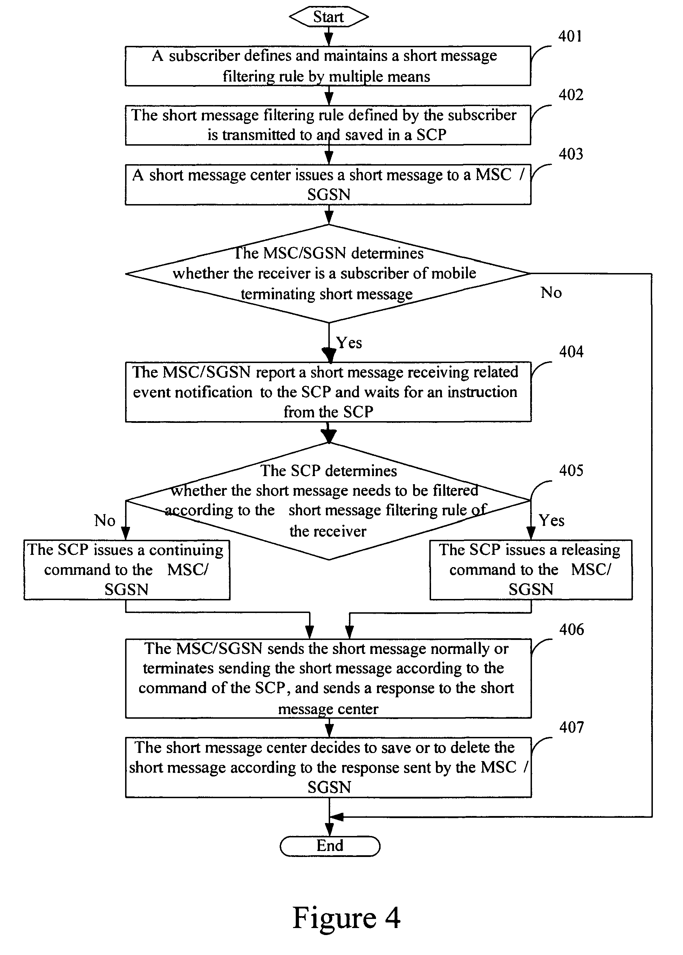

Figure 4 is a flow chart illustrating the method for implementing short message services in accordance with the embodiment of the present invention. As shown in Figure 4, the method for implementing the short message service in accordance with the present embodiment comprises the following steps.

Step 401: A subscriber defines and maintains a short message filtering rule by multiple means.

Step 402: the short message filtering rule defined by the subscriber is transmitted to an SCP by multiple means and saved in the SCP.

Step 403: a short message service center issues a short message to a MSC/SGSN; the MSC/SGSN determines whether the intelligent service needs to be triggered according to the CAMEL subscription information of the subscriber. If the intelligent service needs to be triggered, proceeds to Step 404; if the intelligent service does not need to be triggered, deals with the short message according to the existing short message procedure and terminates the present procedure.

Regarding the short message filtering, whether the intelligent service needs to be triggered is mainly determined by whether there is a content of mobile terminating short message subscription.

Step 404: the MSC/SGSN reports a short message receiving related event notification, which includes subscriber identifiers of the short message originator and the short message receiver, to the SCP, and waits for an instruction from the SCP.

Step 405: the SCP determines whether the short message needs to be filtered according to the saved short message filtering rule of the receiver; if the short message needs to be filtered, the SCP issues a releasing command to the MSC/SGSN to make the MSC/SGSN terminate sending the short message; if the short message does not need to be filtered, the SCP issues a continuing command to the MSC/SGSN to make the MSC/SGSN continue the normal process of sending the short message.

Step 406: the MSC/SGSN sends the short message to the subscriber according to the continuing command, and sends to the short message center a response of successfully sending the short message. Or the MSC/SGSN terminates sending the short message to the subscriber according to the releasing command, and sends to the short message center a response of unsuccessfully sending the short message.

Step 407: the short message center decides to save or delete the short message according to the response of successfully or unsuccessfully sending the short message from the MSC/SGSN and the operator policy, then terminates the procedure.

The short message filtering rule in accordance with the present embodiment includes the length rule and the number rule that are effective at the same time, which is similar to the short message filtering rule in accordance with the first example useful for undestanding the invention.

The subscriber can define and maintain the short message filtering rule by different means. For example:
(1) the Web: the subscriber defines and maintains the short message filtering rule through the Web, which can be done using a computer or a mobile telephone; (2) the WAP: the subscriber logs on a WAP server using a mobile telephone, defines and maintains the short message filtering rule; (3) the USSD: the subscriber interacts with a server by the USSD using a mobile telephone, defines and maintains the short message filtering rule; (4) the client center of the operator: the subscriber contacts the client center of the operator so as to define and maintain the short message filtering rule through voice or other ways; (5) the intelligent network: the subscriber dials an intelligent network access number, defines and maintains the short message filtering rule with the corresponding voice prompts.

Correspondingly, the SCP can acquire the short message filtering rule defined by the subscriber by multiple means. For example, the Web server or the WAP server communicates with the SCP, sends the short message filtering rule defined by the subscriber to the SCP in time; the client center of the operator communicates with the SCP, uploads the short message filtering rule defined by the subscriber in time; the subscriber interacts with the SCP directly so as to define and maintain the short message filtering rule.

Of course, the ways by which the subscriber defines the short message filtering rule, and the ways by which the SCP acquires the short message filtering rule defined by the subscriber are not limited in the present embodiment. Maintaining the short message filtering rule includes such operations as revising the short message filtering rule, deleting a part of the short message filtering rule, deleting all the short message filtering rule, and activating or deactivating the short message filtering rule. The ways by which the subscriber defines the short message filtering rule, and the ways by which the SCP acquires the short message filtering rule defined by the subscriber can be determined by the operator.

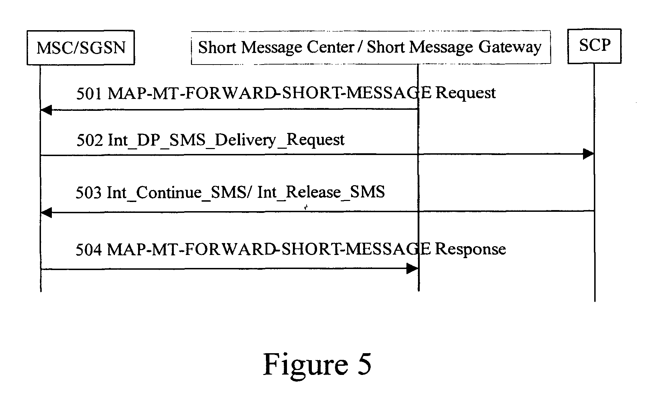

Figure 5 is a message sequence chart illustrating an interaction flow between the MSC/SGSN, the SCP and the SMSC in the short message filtering process in accordance with the embodiment. The process comprises the following steps.

Step 501: a short message service centre (SMSC) sends an MAP-MT-FORWARD-SHORT-MESSAGE request, which includes a short message with the identifier of the receiver and the identifier of the originator, to an MSC/SGSN.

Step 502: the MSC/SGSN determines whether the receiver is a subscriber of the mobile terminating short message according to the content of the MT-SMS-CSI subscription in the CAMEL subscription information of the subscriber. If the receiver is the subscriber of the mobile terminating short message, the MSC/SGSN sends a short message delivery request (Int_DP_SMS_Delivery_Request) message, which includes the identifier of the receiver and the identifier of the originator, to the SCP and waits for a command from the SCP.

Step 503: the SCP determines whether the short message needs to be filtered by analysing the short message filtering rule defined by the short message receiver, and issues a command of continuing sending the short message (Int_Continue_SMS) or a command of releasing the short message (Int_Release_SMS) to the MSC/SGSN according to the result of the determination.

Step 504: the MSC/SGSN sends the short message or terminates sending the short message according to the command of the SCP, and reports a MAP-MT-FORWARD-SHORT-MESSAGE response to the SMSC, indicating that the short message is successfully or unsuccessfully sent.

In Step 503, if the SCP instructs the MSC/SGSN to continue sending the short message, the MSC/SGSN returns a response of successfully sending the short message or a response of unsuccessfully sending the short message to the SMSC according to the factual result of sending the short message. If the SCP instructs the MSC/SGSN to release the short message, the MSC/SGSN terminates the process of sending the short message and returns a response of terminating sending the short message to the short message center.

The response of terminating sending the short message can be implemented with the response of unsuccessfully sending the short message. Specifically speaking, the User Error parameter in the response of unsuccessfully sending the short message is set to an appropriate value such as SM Delivery Failure or other values, indicating that the short message is not allowed to be sent. The short message center deletes the short message after receiving the response of unsuccessfully sending the short message. If the short message center does not delete the short message after receiving the response of unsuccessfully sending the short message, and chooses to send the short message again, when the MSC/SGSN receive the short message again, the MSC/SGSN directly terminates the process of sending the short message and sends a response of successfully sending the short message to the SMSC so as to make the short message center not send the short message again. If the MSC/SGSN knows in advance that the short message center does not delete the short message after receiving the response of unsuccessfully sending the short message, the MSC/SGSN terminates sending the short message and sends the response of successfully sending the short message to the short message center after receiving the releasing command issued by the SCP. Of course, the specific processing performed on the short message filtering taken by the MSC/SGSN can be chosen flexibly according to the capability of the short message center. In accordance with the present embodiment, the network entities can implement filtering the short messages from the specific originator by interacting with each other through standard mobile network interface protocols such as the Mobile Application Protocol (MAP) and the CAMEL Application Protocol (CAP). Of course, since the short message center may not directly provide the interface to the MSC/SGSN in the network deployment, i.e. the short message center and the MSC/SGSN are connected with one another via a short message InterWorking MSC (IW-MSC); the short message center in the present embodiment can also be a short message InterWorking MSC.

With the solution in accordance with the present embodiment, the subscriber can set the short message filtering rule for filtering the short messages from the specific originator and save the short message filtering rule in the SCP. Thus, the function of the short message filtering defined by the mobile subscriber is implemented in the mobile intelligent network. The network entities can implement filtering the short messages from the specific short message originator by interacting through the standard mobile network interface protocols. In such an implementation of the short message filtering through the existing standard interface protocols, it is convenient for the operator to deploy and provide the services, and the subscribers' service satisfaction is improved. Furthermore, it is easy to implement.

To sum up, the foregoing are only preferred examples and embodiments of the present invention and is not to be used for limiting the protection scope thereof.

## Claims

1. A method for implementing short message services, comprising:
setting (101, 401, 402), in a service control point, SCP, short message filtering rules for subscribers through communication between the SCP and a Web server or a Wireless Application Protocol, WAP, server or client center of an operator or the subscribers;
before sending a short message to a receiver, determining (102,405), in the SCP, whether the short message needs to be filtered according to the short message filtering rule of the receiver; if the short message needs to be filtered, filtering (104) the short message; if the short message does not need to be filtered, sending (103) the short message to the receiver.

2. The method according to Claim 1, wherein the short message filtering rule comprises length or number range of an originator number to be permitted or to be banned.

3. The method according to Claim 1 or 2, wherein determining whether the short message needs to be filtered according to the short message filtering rule of the receiver comprises:
after receiving the short message, which carries the number of the originator and the number of the receiver, sent (403) by a short message service center, determining whether the receiver is a subscriber of mobile terminating short messages according to subscriber Customized Application for Mobile network Enhanced Logic, CAMEL, subscription information saved by the Mobile Switching Center, MSC, or the Serving GPRS Supporting Node, SGSN, if the receiver is not a subscriber of mobile terminating short messages, terminating the procedure; if the receiver is a subscriber of mobile terminating short messages, reporting (404) to the SCP a short message receiving related event notification, which carries the subscriber number of the short message originator and the subscriber number of the short message receiver;
determining (405) whether the short message needs to be filtered according to the corresponding short message filtering rule of the receiver saved in the SCP; if the short message needs to be filtered, issuing a releasing command to make the MSC/SGSN terminate sending the short message; if the short message doesn't need to be filtered, issuing a continuing command to make the MSC/SGSN continue a normal process of sending the short message.

4. The method according to Claim 3, wherein reporting to the SCP the short message receiving related event notification comprises:
sending (502) an Int_DP_SMS_Delivery_Request message to the SCP according to a MT-SMS-CSI subscription information of the subscriber.

5. The method according to Claim 3, wherein the releasing command is an Int_Release_SMS command and the continuing command is an Int_Continue_SMS command.

6. The method according to Claim 3, further comprises:
sending (406) to the short message service center a message, which indicates that the short message is successfully or unsuccessfully sent, according to the result of sending the short message;
deciding (407) to save or to delete the short message according to the message sent by the MSC/SGSN.

7. A system for implementing short message services, comprising:
a Web server or a Wireless Application Protocol, WAP, server or client center of an operator, adapted to communicate with a service control point, SCP, for setting short message filtering rules in the SCP; and
the SCP, adapted to determine whether a short message needs to be filtered according to the short message filtering rule of the receiver before sending the short message to the receiver.

8. The system according to Claim 7, further comprising:
an MSC or SGSN, adapted to determine whether the receiver is a subscriber of mobile terminating short messages according to subscriber CAMEL subscription information, and to report to the SCP a short message receiving related event notification, which carries the subscriber number of the short message originator and the subscriber number of the short message receiver, when the receiver is a subscriber of mobile terminating short messages.

## Patentansprüche

1. Verfahren zur Implementierung von Kurznachrichtendiensten, umfassend:
Einstellen (101, 401, 402) von Kurznachrichten-Filterungsregeln in einem Service-Kontrollpunkt (SCP) für Teilnehmer durch Kommunikation zwischen dem SCP und einem Webserver oder einem drahtlosen Anwendungsprotokoll- (WAP) Server oder Client Center eines Anwenders oder des Teilnehmers;
Bestimmen (102; 405) in dem SCP, ob die Kurznachricht entsprechend den Kurznachrichten-Filterungsregeln des Empfängers gefiltert werden muss, bevor eine Kurznachricht an einen Empfänger gesendet wird; Filtern (104) der Kurznachricht, falls die Kurznachricht gefiltert werden muss; Senden (103) der Kurznachricht an den Empfänger, falls die Kurznachricht nicht gefiltert werden muss.

2. Verfahren nach Anspruch 1, wobei die Kurznachrichten-Filterungsregel die Länge oder den Nummernbereich einer Urhebernummer umfasst, die zugelassen oder verboten werden soll.

3. Verfahren nach Anspruch 1 oder 2, wobei das Bestimmen, ob die Kurznachricht entsprechend der Kurznachrichten-Filterungsregel des Empfängers gefiltert werden muss, umfasst:
Nachdem die Kurznachricht empfangen wurde, die die Nummer des Urhebers und die Nummer des Empfängers trägt, die von einer Kurznachrichtendienst-Zentrale gesendet wurde (403), Bestimmen, ob der Empfänger ein Teilnehmer des Beendens mobiler Kurznachrichten gemäß der Teilnehmer-Subskriptionsinformation ist nach der kundenindividuellen Anwendung für verbesserte Logik, mobile Netzwerke, CAMEL, gespeichert von der mobilen Umschaltzentrale, MSC, oder dem Server- GPRS Unterstützungsknotenpunkt, SGSN, falls der Empfänger kein Teilnehmer des mobilen Beendens von Kurznachrichten ist, Beenden des Vorgangs; falls der Empfänger ein Teilnehmer des mobilen Beendens von Kurznachrichten ist, eine den Empfang der Kurznachricht betreffende Ereignismeldung Berichten (404) an das SCP, die die Teilnehmernummer des Kurznachrichtabsenders und die Teilnehmernummer des Kurznachrichtempfängers trägt;
Festellen (405), ob die Kurznachricht gemäß der entsprechenden Kurznachricht-Filterungsregel des Empfängers, die in dem SCP gespeichert ist, gefiltert werden muss; falls die Kurznachricht gefiltert werden muss, Aufgeben eines Freigabebefehls, um die MSC/SGSN zu veranlassen, das Senden der Kurznachricht abzubrechen; falls die Kurznachricht nicht gefiltert werden muss, Ausgeben eines Fortsetzungsbefehls, um die MSC/SGSN zu veranlassen, einen normalen Sendungsvorgang der Kurznachricht fortzusetzen.

4. Verfahren nach Anspruch 3, wobei das Berichten der Ereignismitteilung an den SCP, die das Senden der Kurznachricht betrifft, umfasst:
Senden (502) einer Int_DP_SMS_Delivery_Request Nachricht an den SCP entsprechend einer MT-SMS-CSI Subskriptionsinformation des Teilnehmers.

5. Verfahren nach Anspruch 3, wobei der Freigabebefehl ein Int_Release_SMS Befehl und der Fortsetzungsbefehl ein Int_Continue_SMS Befehl ist.

6. Verfahren nach Anspruch 3, ferner umfassend:
Senden (406) einer Nachricht an die Kurznachrichten-Servicezentrale, die anzeigt, dass die Kurznachricht erfolgreich oder nicht erfolgreich gesendet wurde, entsprechend dem Sendeergebnis der Kurznachricht; Entscheiden (407), ob die Kurznachricht entsprechend der Nachricht, die durch die MSC/SGSN gesendet wurde, gespeichert oder gelöscht wird.

7. System zur Implementierung von Kurznachrichtendiensten, umfassend:
einen Webserver oder ein drahtloses Anwendungsprotokoll-, WAP-Server oder Client Center eines Operators, der geeignet ist, mit einem Servicekontrollpunkt, SCP, (Service Control Point) zu kommunizieren, um Kurznachrichten-Filterungsregeln in dem SCP einzustellen; und
den SCP, der geeignet ist zu bestimmen, ob eine Kurznachricht gemäß der Kurznachrichten-Filterungsregel des Empfängers gefiltert werden muss, bevor er die Kurznachricht an den Empfänger sendet.

8. System nach Anspruch 7, ferner umfassend:
ein MSC oder SGSN, das geeignet ist, zu bestimmen, ob der Empfänger ein Teilnehmer des mobilen Beendens von Kurznachrichten gemäß der Teilnehmer-CAMEL-Subskriptionsinformation ist und an den SPC eine Ereignismitteilung zu berichten, die das Empfangen einer Kurznachricht betrifft, die die Teilnehmernummer des Kurznachrichtenabsenders und die Teilnehmernummer des Kurznachrichtenempfängers trägt, wenn der Empfänger ein Teilnehmer des Beendens mobiler Kurznachrichten ist.

## Revendications

1. Procédé pour mettre en oeuvre des services de messages courts, comportant les étapes consistant à:
établir (101, 401, 402), dans un point de commande de services, SCP, des règles de filtrage de messages courts pour des abonnés via une communication entre le point SCP et un serveur Web ou un centre client ou serveur de protocole d'application sans fil, WAP, d'un opérateur des abonnés;
avant de transmettre un message court à un destinataire, déterminer (102, 405), dans le point SCP, si le message court nécessite d'être filtré selon la règle de filtrage de messages courts du destinataire; si le message court nécessite d'être filtré, filtrer (104) le message court, si le message court ne nécessite pas d'être filtré, transmettre (103) le message court au destinataire.

2. Procédé selon la revendication 1, dans lequel la règle de filtrage de messages courts comporte l'étape consistant à autoriser ou interdire la portée de numéro ou longueur d'un numéro expéditeur.

3. Procédé selon la revendication 1 ou 2, dans lequel l'étape consistant à déterminer si le message court nécessite d'être filtré selon la règle de filtrage de messages courts du destinataire comporte l'étape consistant à:
après avoir reçu le message court, lequel contient le numéro de l'expéditeur et le numéro du destinataire, transmis (403) par un centre de service de messages courts, déterminer si le destinataire est un abonné de messages courts à destination d'une station mobile selon des informations d'abonnement d'application personnalisée pour réseau mobile à logique améliorée (CAMEL) d'abonné, sauvegardées par le centre de commutation du service mobile, MSC, ou le noeud de support GPRS de service, SGSN, si le destinataire n'est pas un abonné de messages courts à destination d'une station mobile, mettre fin à la procédure, si le destinataire est un abonné de messages courts à destination d'une station mobile, faire rapport (404), au point SCP, d'un message court recevant une notification d'événement connexe, lequel contient le numéro d'abonné de l'expéditeur du message court et le numéro d'abonné du destinataire du message court;
déterminer (405) si le message court nécessite d'être filtré selon la règle de filtrage de messages courts du destinataire sauvegardée dans le point SCP, si le message court nécessite d'être filtré, émettre une commande d'arrêt pour forcer le MSC/SGSN à mettre fin à la transmission du message court, si le message court ne nécessite pas d'être filtré, émettre une commande de poursuite pour forcer le MSC/SGSN à poursuivre un processus normal de transmission de message court.

4. Procédé selon la revendication 3, dans lequel l'étape consistant à faire rapport au point SCP du message court recevant une notification d'événement connexe comporte l'étape consistant à:
transmettre (502) un message de demande de distribution de message court « Int_DP_SMS_Delivery_Request » au point SCP selon les informations d'abonnement de SMS-MT-CSI.

5. Procédé selon la revendication 3, dans lequel la commande d'arrêt est une commande « Int_Release_SMS » et la commande de poursuite est une commande « Int_Continue_SMS ».

6. Procédé selon la revendication 3, comportant en outre les étapes consistant à:
transmettre (406), au centre de service de messages courts, un message qui indique que le message court est transmis correctement ou qu'il n'est pas transmis correctement, selon le résultat de l'envoi du message court;
décider (407) de sauvegarder ou de supprimer le message court selon le message transmis par le MSC/SGSN.

7. Système pour mettre en oeuvre des services de messages courts, comportant:
un serveur Web ou un centre client ou serveur de protocole d'application sans fil, WAP, d'un opérateur, apte à communiquer avec un point de commande de service, SCP, pour établir des règles de filtrage de messages courts dans le point SCP; et
le SCP, apte à déterminer si un message court nécessite d'être filtré selon la règle de filtrage de messages courts du destinataire avant la transmission du message court au destinataire.

8. Système selon la revendication 7, comportant en outre:
un centre MSC ou un noeud SGSN, apte à déterminer si le destinataire est un abonné de messages courts à destination d'une station mobile selon des informations d'abonnement CAMEL d'abonné, et à faire rapport, au point SCP, d'un message court recevant une notification d'événement connexe, lequel contient le numéro d'abonné de l'expéditeur du message court et le numéro d'abonné du destinataire du message court, lorsque le destinataire est un abonné des messages courts à destination d'une station mobile.
